# EUROPEAN PATENT APPLICATION

(11) **EP 4 692 848 A2**
(43) Date of publication of application: **11.02.2026**
(21) Application number: 25221417.6
(22) Date of filing: 15.07.2024
(51) Int. Cl.: G01S 13/76

(54) **METHODS AND SYSTEMS OF LOCATION DETERMINATION**

(62) Divisional of application: 24275084.2
(71) Applicant: Helsing GmbH, 81671 Munich (DE)
(72) Inventor: FAITH, Joe, 81671 Munich (DE)
(74) Representative: Haseltine Lake Kempner LLP

(57) **Abstract**

A computer-implemented method of determining the location of an asset is provided, the method comprising: performing, from the asset, detection of one or more detected objects based on received signals received by the asset; determining, based on the received signals, a relative position of the one or more detected objects with respect to the asset; determining, based on the received signals, an identity of the one or more detected objects; determining a current absolute position of the one or more detected objects; and determining a current absolute position of the asset based on the relative position of the asset with respect to the one or more detected objects and the current absolute position of the one or more detected objects.

## Description

### Field of the Invention

The present invention relates to methods and systems of location determination, and particularly methods and systems of location determination in the absence of Global Navigation Satellite Systems (GNSS) functionality.

### Background of the Invention

When moving objects are above ground and above water, the most common method for determining their location is using GNSS. However, GNSS is not always available and in some instances its use is not desirable. For instance, GNSS may not be available due to signal connectivity issues. Alternatively, in certain circumstances such as conflict situations, access to GNSS may be denied - for instance by jamming - spoofed and so unreliable. Hence determining one's location in these circumstances, without the use of GNSS, can be difficult and inaccurate.

Alternative methods for determining location exist. For instance, the use of visible landmarks is a possible method. However, in many scenarios no recognizable visible landmarks are available, such as at night, in poor weather, or at sea. Further, even when visible landmarks are available, their use for determining one's location can be inaccurate.

Another known method is the use of inertial navigation systems, which attempt to use motion sensors to continuously calculate location via dead reckoning and without the need of external references. Hence these systems can be used to determine one's location relative to a known starting point, but are disadvantageously susceptible to 'drift' inaccuracies due to path integration errors over extended periods of time, or for instance when the moving object is subject to constant acceleration, such as on a platform at sea.

Hence there is a need for improved methods and systems of determining location, in particular in the absence of current GNSS data.

Certain aspects of the present disclosure and their embodiments may provide solutions to these or other challenges.

### Statement of the Invention

Aspects of the invention are defined by the accompanying claims. Preferred optional features are defined in the dependent claims.

According to an aspect, there is provided a computer-implemented method of determining the location of an asset, the method comprising: performing, from the asset, detection of one or more detected objects based on received signals received by the asset; determining, based on the received signals, a relative position of the one or more detected objects with respect to the asset; determining, based on the received signals, an identity of the one or more detected objects; determining a current absolute position of the one or more detected objects; and determining a current absolute position of the asset based on the relative position of the asset with respect to the one or more detected objects and the current absolute position of the one or more detected objects.

The determining the current absolute position of the one or more detected objects may comprises retrieving, from a database, position information about the one or more detected objects based on the identity of the one or more detected objects.

The received signals may comprise reflected radar signals received in response to the asset emitting radar signals from a radar array. The radar array may be an active phased radar array.

The received signals may comprise electromagnetic signals emitted or reflected by the one or more detected objects. The electromagnetic signals emitted by the one or more detected objects may comprise communications data and/or observation data, and/or surveillance data, for instance image data.

The relative position of the asset may comprise the azimuth and elevation of the one or more detected objects determined by analysing the received signals.

The relative position may further comprise the distance from the asset to the one or more detected objects as determined by analysing the received signals.

The database may comprise information associating the identity of one or more objects with position information, the position information may comprise travel path information for the one or more objects. The travel path information may comprise the absolute position of the one or more objects at any point in time, and determining the current absolute position of the one or more objects may comprise retrieving the current absolute position of the one or more objects. Additionally or alternatively, the travel path information may comprise a known absolute position of the one or more objects at one or more particular points in time, for instance a previous point in time, and determining the current absolute position of the one or more objects may comprise calculating the current absolute position based on: a current point in time, and the known absolute position at the one or more particular points in time or the travel path information.

The object may be a satellite, and the travel path information may comprise the orbit of the satellite. Additionally or alternatively, the object may be an aeroplane, and the travel path information may comprise flight path information. Additionally or alternatively, the object may be a maritime vessel, and the travel path information may comprise the shipping or sailing path information.

Determining the identity may comprise: determining an estimated current absolute position of the asset based on a known absolute position of the asset at a previous point in time and the approximate travel path of the asset from the known absolute position of the asset; determining, for one or more detected objects, a first estimated current absolute position based on the determined relative position and the estimated current absolute position of the asset; determining, for one or more objects from the database of a known identity, a second estimated current absolute position; and comparing the first and second estimated current absolute positions, and determining that the identity of one of the one or more detected objects is the known identity of an object from the database with the second estimated current absolute position.

The one or more objects from the database may be of a known absolute position at the previous point in time, and determining the second estimated current absolute position may be based on the travel path information for the one or more objects. If the comparison is above a confidence threshold, then performing the determining may comprise that the identity of the one or more detected objects is the known identity of an object from the database with the second estimated current absolute position. This process may be performed repeatedly or iteratively, at the substantially the same point in time or at different and extended periods of time, and the confidence value may increase based on this multiple processing.

The known absolute position of the asset at the previous point in time may have been determined using GNSS.

The approximate travel path of the asset may have been determined based on the velocity and time of travel of the asset since the previous point in time.

Determining the identity of the one or more detected objects may comprise determining the identity of a first one of the detected objects having distinguishable characteristics with respect to the others of the detected objects, and subsequently determining the identity of others of the one or more detected objects based on the identity of the first one of the detected objects. The distinguishable characteristics may comprise any characteristics that are relatively dissimilar, unusual, unique or particular identifiable as compared to other objects. For instance, the distinguishable characteristics may comprise at least one of: an unusual orbit, a high orbit, an elliptical orbit, characteristic electromagnetic emissions, and/or characteristic radar cross section. The first one of the objects may be a geostationary satellite, and/or a low-earth orbit satellite and/or a medium earth orbit satellite. Determining the identity of others of the one or more detected objects may be further based on determining the absolute position information of the first one of the detected objects, and searching for other elevated objects in the database having position information similar to the absolute position information of the first one or more detected elevated objects.

Determining the identity may comprise determining the radar cross section of the one or more objects. Performing identification may comprise retrieving the identity of the one or more objects from a database comprising information associating particular radar cross sections with the identities of particular objects. The database may further comprise radar cross section information comprising information associated with reflection characteristics and/or different signal characteristics. Performing identification may comprise inputting the radar cross section into a machine learning model configured to perform identification of objects based on the radar cross section.

Determining the identity may comprises determining the identity of the one or more objects based on content and/or characteristics of the electromagnetic signals emitted by the one or more objects. Performing identification may comprise retrieving the identity of the one or more objects from a database comprising information associating particular content and/or characteristics of the electromagnetic signals emitted by the one or more objects with the identities of particular objects. The electromagnetic signals emitted by the one or more objects may comprises communications data and/or observation data, and/or surveillance data, for instance image data. The characteristics may comprise frequency, data bandwidth, pulse, length encoding, type etc.

The database may includes at least one of: publicly accessible information; and/or previously determined absolute position information of the asset, and/or previously determined absolute position information one or more objects, at one or more historical points in time.

The database may be updated as incrementally, periodically and/or every time the asset performs at least one of: detection of one or more detected objects based on received signals received by the asset; determining, based on the received signals, a relative position of the one or more detected objects with respect to the asset; determining, based on the received signals, an identity of the one or more detected objects; determining a current absolute position of the one or more detected objects, comprising retrieving, from a database, position information about the one or more detected objects based on the identity of the one or more detected objects; and/or determining a current absolute position of the asset based on the relative position of the asset with respect to the one or more detected objects and the current absolute position of the one or more detected objects.

The database may include publicly accessible information such as the orbits of satellites as published by the ITU WRS-22: Regulation of satellites in Earth's orbit, and/or public passenger aeroplane flight information, and/or public maritime vessel location information such as that gathered from AIS (Automatic identification system) transponders.

The objects may be elevated objects. For instance the elevated objects may be elevated in the sense of being objects detected from the perspective of the asset as being above the 'visible' horizon, with reference to for instance line of sight from the asset.

The one or more objects may be astronomical objects such as satellites, and/or aerial objects such as aeroplanes and/or maritime objects such as maritime vessels. When the objects are satellites, the satellites may be low earth orbit satellites or medium earth orbit satellites.

The asset may be a vehicle. The vehicle may be an aerial vehicle such as a plane or drone; or the vehicle may be a maritime vessel such as a boat; of the vehicle may be a land vehicle. The asset may be moving or stationary.

The determining the current absolute position of the one or more detected objects may be based on the received signals.

According to an aspect there is provided a computer-readable storage medium comprising instructions which, when executed by a computer, cause the computer to carry out a method in accordance with any aspect, embodiment or described process as outlined in the present application.

According to an aspect there is provided a system comprising an asset, the asset comprising a detection systema and a processor, the processor configured to perform any method or process as described herein. For instance, the processor may be configured to perform a computer-implemented method of determining the location of an asset, the method comprising: performing, from the asset, detection of one or more detected objects based on received signals received by the asset; determining, based on the received signals, a relative position of the one or more detected objects with respect to the asset; determining, based on the received signals, an identity of the one or more detected objects; determining a current absolute position of the one or more detected objects, comprising retrieving, from a database, position information about the one or more detected objects based on the identity of the one or more detected objects; and determining a current absolute position of the asset based on the relative position of the asset with respect to the one or more detected objects and the current absolute position of the one or more detected objects.

Aspects and embodiments of the present application provide methods and systems for determining location in such scenarios, where for instance such information is not available. Aspects and embodiments of the present application have determined that the same principles of location determination can be applied to a range of objects which do not actively communicate their identity and/or absolute location, but for which it is possible to determine the identity and therefore absolute location through certain measurements and observations. Accordingly, aspects and embodiments of the present application may advantageously provide methods and systems for determining the location of an asset by actively determining the identity and absolute position of at least one detected object, and by determining information about the relative position of the asset with respect to the object. Hence aspects and embodiments of the present application may advantageously provide methods of determining the location of an asset without the use of GNSS systems, the conventional method, but with improved accuracy as compared to state of the art methods such as inertial navigation, dead reckoning or the use of Earth based landmarks etc.

Aspects and embodiments of the present application may provide for advantageously fast, efficient and reliable manners of determining the location of an asset in the absence of conventional navigation and location determination systems.

Aspects and embodiments of the present application may provide for an advantageous manner of determining the location of an asset using hardware already installed on certain types of vehicles, such as those vehicles having radar systems and/or electromagnetic receiver antennas.

Aspects and embodiments of the present application may provide for an advantageous manner of determining the location of an asset regardless of where the asset is located on the Earth.

Aspects and embodiments of the present application may provide for an advantageous manner of determining the location of an asset in a manner that associates a particular confidence value to the determination, which can then be increased over time using repeated or different manners of location determination, and which can be supplemented with other forms of location determination to increase the accuracy of the location determination and increase the confidence value associated with the location determination.

Aspects and embodiments of the present application may provide for an advantageous manner of determining the location of an asset using publicly available information, such that the nature of the information is considered reliable and accurate as it is routinely updated and monitored and maintained and corrected by a plurality of different third party organizations. For instance, such publicly available information may include the orbits and locations of satellites, such as low-earth orbit satellites, medium-earth orbit satellites, communications satellites, geostationary satellites, space stations, other space objects, man-made space objects, aeroplanes such as passenger flights, maritime vessel location and route information etc.

Aspects and embodiments of the present application may provide for an advantageous manner of determining the location of an asset without giving away the location of the asset, i.e. without the asset being detectable by third parties, during the location determination. For instance, the asset may perform location determination solely by receiving signals, and not actively emitting any signals.

Aspects and embodiments of the present application may provide for location determination of the asset that works in the absence of GNSS networks and visible locations, and is stable over time and robust against path integration errors.

Various aspects and embodiments of the invention are described without limitation below, with reference to the figures.

### Brief Description of the Drawings

There now follows, by way of example only, a detailed description of preferred embodiments of the present invention, with reference to the figures identified below.
- **Figure 1**: shows a flow chart of a method;
- **Figure 2**: shows an example system;
- **Figure 3**: is a diagram illustrating an apparatus.

### Detailed Description

In the following description, functionally similar parts carry the same reference numerals between figures. The following sets forth specific details, such as particular aspects, embodiments or examples for purposes of explanation and not limitation. It will be appreciated by one skilled in the art that other examples may be employed apart from these specific details. Aspects and embodiments of the invention are now described, without limitation and by way of example only, with reference to the accompanying drawings.

One of the key features of GNSS communications systems is that for an asset interested in determining its location, when communicating with a GNSS satellite the GNSS data communications provide the identity and absolute location of the satellite providing the communication. The absolute location is provided in an absolute coordinate system, such as WGS84 or ETRS89 etc., as well as many other known coordinate systems. For each of these coordinate systems, transformations between coordinate systems are well known and able to be looked up such that regardless of what format the absolute position information is provided to the asset. In this system all that is required is the identity- and therefore absolute location - of three or more GNSS satellites and the determination of the distance of the asset from each of said satellites. Given this information it is known how to determine by calculation the location of the asset.

To easily facilitate location determination, GNSS satellites are specifically designed to transmit the requisite information - such as identity and absolute location. However, there are many scenarios in which the use of GNSS, and equivalently the use of location determination methods that rely on an asset being provided with the identity and absolute position information by third party entities, are not available.

Aspects and embodiments of the present application provide methods and systems for determining location in such scenarios, where for instance such information is not available. Aspects and embodiments of the present application have determined that the same principles of location determination can be applied to a range of objects which do not actively communicate their identity and/or absolute location, but for which it is possible to determine the identity and therefore absolute location through certain measurements and observations. Accordingly, aspects and embodiments of the present application may advantageously provide methods and systems for determining the location of an asset by actively determining the identity and absolute position of at least one detected object, and by determining information about the relative position of the asset with respect to the object.

Aspects and embodiments of the present application may advantageously provide methods of determining the location of an asset without the use of GNSS systems, the conventional method, but with improved accuracy as compared to state of the art methods such as inertial navigation, dead reckoning or the use of Earth based landmarks etc.

Aspects and embodiments of the present application may provide for advantageously fast, efficient and reliable manners of determining the location of an asset in the absence of conventional navigation and location determination systems.

Aspects and embodiments of the present application may provide for an advantageous manner of determining the location of an asset using hardware already installed on certain types of vehicles, such as those vehicles having radar systems and/or electromagnetic receiver antennas.

Aspects and embodiments of the present application may provide for an advantageous manner of determining the location of an asset regardless of where the asset is located on the Earth.

Aspects and embodiments of the present application may provide for an advantageous manner of determining the location of an asset in a manner that associates a particular confidence value to the determination, which can then be increased over time using repeated or different manners of location determination, and which can be supplemented with other forms of location determination to increase the accuracy of the location determination and increase the confidence value associated with the location determination.

Aspects and embodiments of the present application may provide for an advantageous manner of determining the location of an asset using publicly available information, such that the nature of the information is considered reliable and accurate as it is routinely updated and monitored and maintained and corrected by a plurality of different third party organizations. For instance, such publicly available information may include the orbits and locations of satellites, such as low-earth orbit satellites, medium-earth orbit satellites, communications satellites, geostationary satellites, space stations, other space objects, man-made space objects, aeroplanes such as passenger flights, maritime vessel route and location information etc.

Aspects and embodiments of the present application may provide for an advantageous manner of determining the location of an asset without giving away the location of the asset, i.e. without the asset being detectable by third parties, during the location determination. For instance, the asset may perform location determination solely by receiving signals, and not actively emitting any signals.

Aspects and embodiments of the present application may provide for location determination of the asset that works in the absence of GNSS networks and visible locations, and is stable over time and robust against path integration errors.

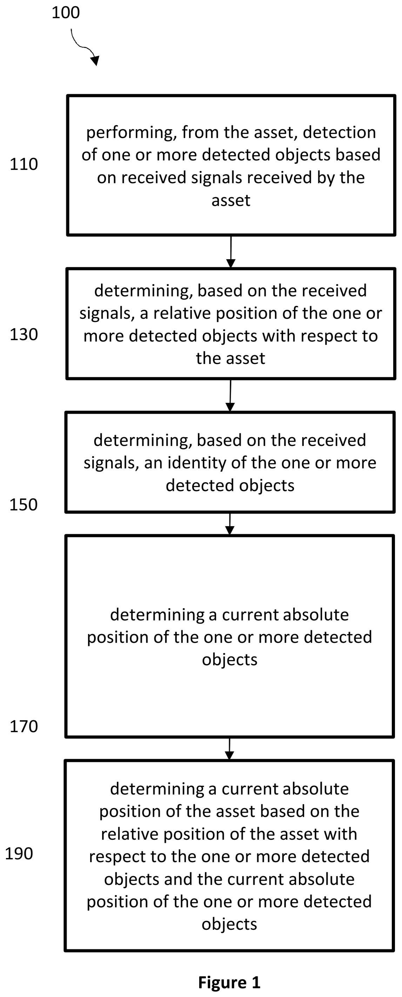

**Figure 1** shows a flow chart of a computer-implemented method 100 for determining the location of an asset. For instance, the asset may be located somewhere on Earth and does not know its current location. The asset may have never determined its location before, it may have determined its location at some previous point in time, and have stored this information, but does not know its current location. For instance, the asset may or may not have GNSS systems, but regardless use of the GNSS systems is not possible, desirable or practical at the present time. For instance, GNSS may not be available due to signal connectivity issues. Alternatively, in certain circumstances such as conflict situations, access to GNSS may be denied - for instance by jamming - spoofed and so unreliable.

The asset may be a vehicle, and may be stationary or moving. The asset may be an aerial vehicle such as a plane or a drone, or may be a maritime vessel such as a boat, or may be a land vehicle such as a car or lorry or tank. The absolute position information may be provided or determined in any appropriate format which defines unique coordinate information, for instance in an absolute coordinate system such as WGS84 or ETRS89 etc., as well as any other known appropriate coordinate systems. For each of these coordinate systems, transformations between coordinate systems are well known and able to be looked up and/or calculated regardless of what format the absolute position information is.

In step 110, detection of one or more detected objects is performed from the asset and based on signals received by the asset.

Regardless of the specific type of asset, the asset includes a detection system which may be continuously or semi-continuously on, or turned on incrementally, but which regardless is used to detect objects in the surrounding environment external to the asset. Regardless of the specific form of detection system, the detection system can be used to determine at least the three-dimensional direction of received signals, for example from a detected object. The three-dimensional direction may be determined in any appropriate manner, such as using relative azimuth and elevation or any appropriate equivalent such as angle, altitude, latitude, longitude etc. The detection system may additionally be capable of determining the relative distance between the asset and the detected object. In particular, the asset may use detection systems in the form of radar detection systems, such as an active radar array. Additionally or alternatively, the asset may use may use electromagnetic (EM) detections systems such as directional antennas, transmitters and receivers capable of receiving EM signals across a wide range of frequency bands including those used to send communications data, such as communications data emitted from satellites and/or aeroplanes.

Optionally, the asset also includes additional and other forms of navigation, location determination and/or tracking system. For instance, the asset may additionally include at least one of an orientation or compass system, an inertial navigation system, systems for tracking the velocity and/or speed and direction of movement of the asset. The asset is capable of time determination in general and in association with any measurements it makes.

At a particular point in time, the asset may decide to attempt to determine its location. Accordingly, the asset may activate or engage its detection system, and may perform detection accordingly using the system. Aspects and embodiments of the present invention envisage that for any asset of any type operating on Earth, including within Earth's airspace, the most ubiquitous and available domain in which to search for objects to assist in determining the asset's location is the sky. In other words, no matter where the asset is located on Earth - either on land or at sea or airborne - the most accessible and consistently available direction in which to search to find objects which may be of assistance in determining the location of the asset is upwards, in other words to search away from the surface of the Earth, and instead to 'look' - i.e. to search or detect - toward the sky in any direction in which the sky is visible.

For instance, even if the asset is a maritime vessel far out at sea, whilst there may be no Earth-bound visible objects or landmarks or recognizable entities, it is always possible to look upward to the sky for potentially useful objects which may assist in determining the asset's location. Here, the sky refers to both the skyline within the Earth's atmosphere, but also beyond into space, and in particular to any direction above the horizon. In other words, that is anything detectable when a search is performed in a direction away from the Earth's surface. Accordingly, aspects and embodiments of the application may refer to any such objects as elevated objects, as these objects are not on the Earth's surface. In particular, elevated objects may be any objects detected from the perspective of the asset as being above the 'visible' horizon, with reference to for instance line of sight from the asset.

In historical navigation systems, the equivalent objects which assets would attempt to detect would be celestial objects such as starts and planets, and from these location determination and navigation would be possible through complex calculations. In the aspects and embodiments of the present application the objects comprise objects which the asset is able to detect using its detection systems. Example detection systems include radar systems and electromagnetic receiver systems, which have detection ranges associated with them Not all objects are with the detection range, and the detection range may change based on different detection systems. For instance, the objects may comprise satellites and/or aeroplanes - in particular low-earth orbit and medium-earth orbit satellites - which are within the detection range.

In a specific embodiment the detection system comprises at least a radar system, for instance an active phase array radar. Radar systems are advantageous as they can search large detection volumes quickly, detect hundreds of objects simultaneously, and are usually used to detect for instance airborne threats such as combat aircraft or missiles. Further, because of this they are often used on vehicles such as military vehicles in which detection of both stationary and moving objects in the surrounding area is used. Modern radar systems are extremely powerful, and can perform detection within a maximum detection distance of approximately 36,000 km. Accordingly, it is possible for these radar systems to detect objects over a large distance and detection volume. For instance these radar systems can therefore detect aeroplanes, Low Earth Orbit (LEO) satellites - occupying regions from 160km to 2000km from Earth - and Medium Earth Orbit (MEO) satellites - occupying regions from 2000km to 35786km from Earth - including geostationary satellites. In a specific embodiment, the radar system may be sufficiently powerful to detect at least LEO satellites. In particular, by some estimates there are up to as many as 10,000 LEO satellites in orbit, and hence this presents an advantageously large number of LEO satellites which may be able to be detected and used for location determination, and many of these LEO satellites are approximately 300km from Earth.

Accordingly, when detection is performed using a radar system, a large number of objects within the maximum detection distance of the radar system can be detected. The detection includes emitting radar signals and receiving radar signals reflected off the objects within the maximum detection distance. The detection system of the asset includes or is in connection with information processing systems capable of controlling, processing and storing information related to the functioning of the detection system, such as the emission and receipt of signals by the detection system.

In the specific embodiment of a radar system, the detection system is able to use radar signals to determine at least the distance (ranging) and direction (azimuth and elevation angles) of detected objects relative to the detection system, and may also be able to detect the radial velocity. Further, radar detection systems can additionally determine the radar cross-section (RCS) -or radar signature - of detected objects, which is a measure of how detectable an object is by radar, for instance in terms of the extent and manner in which a detected object reflects and scatters radar signals. RCS can be used to determine the type and/or specific identity of objects, depending on how unique and identifiable the RCS is for a particular object. For instance, some objects have a characteristic radar cross section, such as for instance The International Space Station in low-earth orbit, which can be used to quickly and efficiently determine identity for objects which do not look similar to other objects. Hence, in using the radar detection system as described, the asset can emit and receive signals which include information about the objects detected in the maximum detection distance of the detection system being used. For instance, the asset can receive information which can be used to determine the distance, direction (azimuth and elevation angle) and/or radar cross section of a plurality of objects in the maximum detection distance of the detection system.

Accordingly, by performing detection using the detection system, such as the radar detection system as described above, the asset can detect the presence of detected objects based on signals received by the asset, for instance wherein the received signals comprise reflected radar signals received in response to the asset emitting radar signals from a radar array.

In a specific embodiment, which can be an alternative to or in combination with the radar detection system as described above, the detection system includes at least an electromagnetic (EM) signal receiving system for receiving and processing electromagnetic signals (EM), for instance communications signals over radio waves, telecommunication signals, observation data, surveillance data, video and image data, audio data, broadcasting, navigation systems, communications satellites, mobile phones and base stations etc. These detection systems for receiving and processing electromagnetic signals may or may not be capable of active emission of EM signals. Hence the detection system may be a receiver or a transceiver, and will include for instance antennas. Regardless, these detection systems will be capable of operating in a receiver only mode, i.e. a passive or quite mode, in which the detection system does not actively emit any signals itself, but instead merely 'listens' and receives and processes signals from within maximum detection distance of the detection system. The use of such a receiver only mode may be advantageous in certain contexts such as when the asset does not want to emit any signals which may increase the likelihood of it being detected by third parties, for instance in military contexts in which the asset wishes to avoid detection. The maximum detection distance of these detection systems is very large, and by definition includes the operating altitude of all aeroplanes and LEO and MEO satellites as each of these specific examples of objects use these communications systems to emit and receive communications data.

Accordingly, when detection is performed using the EM signal receiving system, a large number of objects within the maximum detection distance of the system can be detected. The detection includes receiving the EM signals emitted by any object, such as communications and navigation data from aeroplanes and communications data from satellites. The detection system of the asset includes information processing systems capable of controlling, processing and storing information related to the functioning of the detection system, such as the receipt of signals by the detection system. In the specific embodiment of the EM signal receiving system, the detection system is able to use the detected received EM signals to determine at least the direction (azimuth and elevation) of the detected object emitting the signals, and may further be able to determine from the data content of the received EM signals the identity of the object performing the signal emission. For instance, by analyzing the specific data information being emitted in the communications signals, it may be possible to determine the identity of the object doing the emitting because its emitted signals are relatively unique, identifiable or dissimilar to other emitted EM signals. For instance, representative examples of objects that could be identified in this manner include at least: the International Space Station, the Hubble Space Telescope, the Chinese Space Station, the Gravity Recovery and Climate Experiment (GRACE), as well as for instance Skynet and other X band satellite communication systems. Further, for instance, certain maritime vessels may have AIS transponders and may transmit AIS (Automatic identification system) information including for instance the unique vessel identity and/or the position information in the form of coordinates. Hence, in using the EM received signal detection system as described, the asset can receive signals which include information about the objects detected in the maximum detection distance of the detection system being used. For instance, the asset can receive information which can be used to determine the direction (azimuth and elevation angle) and/or identity of a plurality of objects in the maximum detection distance of the detection system.

Accordingly, by performing detection using the detection system, such as the EM received signal detection system as described above, the asset can detect the presence of detected objects based on signals received by the asset, for instance wherein the received signals comprise electromagnetic signals emitted or reflected by the one or more detected objects.

As noted above, in specific embodiments the asset may include a single or multiple detection systems, such as the radar detection system and/or the EM received signals detection system. In specific embodiments comprising a plurality of detection systems, each system can be used independently, or in combination, simultaneously, or at different times. The combination of a plurality of different detection systems may serve to advantageously improve the accuracy of the detection of the detected objects, for instance where each detection system detects at least some of the objects detected by the other detection system, as well as additional objects not detected by the other detection system, thereby increasing the quantity of detected objects. Further, the accuracy of a single detected object can be increased when, for instance, it is detected by more than one detection system and the results from each detection system are compared and combined or averaged in some manner. For instance, where the direction, such as azimuth and elevation, for a particular object is detected by both detection systems, the directions as detected by each can be compared and/or combined and an improved accuracy direction for that particular detected object can be arrived at. Accordingly, confidence values may be associated with the measurements and determination made by any of the methods and processes described herein, and the confidence values can be increased by repeatedly performing measurements or by performing the same measurement or determination using different detections systems and/or processes.

In the embodiments, a detected object refers to for instance any object from which signals are received by the asset detection system, regardless of whether that object is actively emitting those signals such as in the case of a communications satellites or aeroplane, or whether those signals are reflections of signals which the asset detection system has emitted and which have been reflected from the object and received at the asset detection system.

In step 130, a relative position of the one or more detected objects with respect to the asset is determined based on the received signals.

In specific embodiments, for instance as described above, the relative position may be equal to, or determined based on, the direction of the detected object using any of the manners of detection previously described. For instance, using either of the radar detection system and/or the EM received signals detection system, it is possible to determine the direction of any detected objects in terms of the azimuth and elevation of the detected object relative to the asset. The relative position of the one or more detected objects is determined in any appropriate absolute coordinate reference system representing positions on and relative to Earth, for instance such as geodetic, geocentric coordinates, Earth-centered Earth-fixed (ECEF), east-north-up (ENU), north-east-down (NED), and azimuth-elevation-range (AER) systems etc. The direction of the received signals at the asset relative to the asset - either from radar echo reflections or EM signals emitted by the objects - can be determined using the detection system hardware and associated processing software. The conversion of this information into an absolute coordinate reference system can be performed using known calculations and may be performed in combination with other information available to the asset such as from any other forms of navigation, location determination and/or tracking system on board, such as for instance at least one of a orientation or compass system, an inertial navigation system, systems for tracking the velocity and/or speed and direction of movement of the asset.

Accordingly, the relative position of the asset may comprise the azimuth and elevation of the one or more detected objects determined by analysing the received signals.

In specific embodiments including the radar detection system, the relative position may additionally or alternatively include the distance of the detected object from the asset.

Hence in specific embodiments, for each detected object the asset may determine the relative position of the detected object(s) in terms of the direction, such as azimuth and elevation, and further may additionally include the distance.

Accordingly, the relative position of the detected object may further comprises the distance from the asset to the one or more detected objects as determined by analysing the received signals.

In step 150, an identity of the one or more detected objects is determined based on the received signals.

The identity of the one or more detected objects can be determined in a number of different ways.

In specific embodiments, the identity of the detected object(s) may be determined in at least one of the following manners. In a specific embodiment wherein the detection system is the EM received signals system, the identity of the detected object(s) may be determined based on the EM signals emitted by that object and as received at the asset. For instance, the identity may be able to be determined based on the content and/or the characteristics of the EM received signals. Hence by analysing the received EM signals emitted by the detected object(s), it may be possible to determine which object transmitted them.

For instance, some objects, such as some aeroplanes and satellites and maritime vessels (in AIS information), actively transmit information pertaining to their unique identity and hence by analysing the content of the EM received signals the identity of the object may be determined with near certainty. Alternatively or additionally, the content of the communications signals and what information is being emitted - telecommunications, navigation, audiovisual etc. - may be able to be analysed to determine the identity of object. For instance, it may be that certain satellites and/or aeroplanes are relatively unique or unusual in transmitting that particular type of information, such as for instance weather information. This may provide an identity for the object which is certain, or which may be of a particular certainty or confidence level. Alternatively or additionally, the form of the EM received signals may be analysed to assess the characteristics of the EM signals emitted by the object. For instance, particular characteristics may include the frequency, data bandwidth, pulse, length encoding, type etc. This may provide an identity for the object which is certain, or which may be of a particular certainty or confidence level.

In a specific example, it may be possible to determine that one or more of the detected objects is an LEO satellite, for instance because these satellites transmit telecommunications and satellite imaging data, or because these satellites include relatively well know and unique objects such as the Hubble Telescope and the International Space Station.

In specific embodiments wherein the detection system includes the radar detection system, the identity of the detected object(s) may be determined based on the radar cross section of the detected object. In a similar manner to the EM received signals embodiment as described above, the radar cross section of a detected object may be unique, or may be relatively unusual or unique, such that it can be used to determine the identity of detected object. For example, as previously described, the International Space Station and Hubble Telescope may have a relatively unique and readily determinable radar cross section.

In specific embodiments wherein the detection system includes the radar detection system, the identity of the detected object(s) may additionally be able to be determined based on the determined distance to the detected object. For instance, especially when this information is combined with either the radar cross section and/or the EM received signal information, the determined distance may be particularly indicative or for instance a LEO satellite as it is within that approximate range, or similarly an aeroplane as the distance is within the approximate range of aeroplane cruising altitude etc.

For any of the methods of determining the identity as described herein, the determined identity of any particular detected object may be determined with an associated certainty or confidence value, wherein the confidence value can increase or decrease over time based on multiple or repeated detections of objects and multiple instances of performing the identity determination. These multiple instances of determining the identity may be multiple instances over and at different periods of time, or may be multiple instances at a similar or the same time but based on for instance information derived from different detection systems. In certain specific embodiments, the determination of the identity of any particular detected object may only occur once the certainly or confidence value is above a threshold.

As noted above, in specific embodiments the asset may include a single or multiple detection systems, such as the radar detection system and/or the EM received signals detection system. In specific embodiments comprising a plurality of detection systems, each system can be used independently, or in combination, simultaneously, or at different times. However, the combination of a plurality of different detection systems serves to improve the accuracy of the determining of the identity of the detected objects, for instance as each detection system provides different types of information based on the different types of received signals which may be used in combination to increase and improve the accuracy of determining the identity of any particular detected object. For instance, the determining of the identity using the information from each different type of detection system can be compared, cross-checked and/or combined to provide a single identity for a particular detected object with a higher confidence value or certainty than when only a single type of detection system is implemented.

Regardless of the type of received signals used to perform the determination of the identity of the detected object be it radar signals, EM received signals, or a combination of the two etc. - the determination may be performed in a number of different ways, or through a combination of these ways. For instance, the received signals, such as radar cross section and/or content and characteristics of EM received signals, may be used to lookup information in a database. The database may be a remote publicly accessible and available database, may be a locally stored database, or may be a combination of the two such as local database including a copy of information in a publicly accessible database wherein the local database is updated when connection to the remote publicly accessible database is available and/or desirable. There may be a plurality of databases, with each containing or being relevant to different types of received signal, such as one database for radar cross section information and one database for EM received signal information.

The database, regardless of type, may include information which associates the received signals - where 'received signals' includes information derived from the received signals such as radar cross section and/or the content and characteristics of EM received signals - with identities of specific objects. For instance, the content and/or characteristics of the EM signals emitted by certain satellites may be publicly available information, and as might the radar cross section, for instance with information associated with different objects and with reflection characteristics and/or different signal characteristics.

Hence the determining of the identity of the detected object may comprise looking up the received signals or information derived from the signals in the database and determining the identity of the objects associated with said received signals or information derived from the signals. The database, for instance the locally stored database, may include information from previous or historic determinations of identity, for instance as performed by the asset or by other assets and shared with the asset. For instance, the asset may have previously known, determined, or been told of the identity of a particular object and been able to associate received signals with said object - such as a specific radar cross section and/or particular content and characteristics of received EM signals - and in such instances then the asset may have stored this information and association for future use and retrieval. Alternatively and/or additionally, there may be publicly available and accessible databases which may include this information which can be accessed. For instance, satellites are allocated and have to register the specific frequency ranges they will use, as is governed and managed by the International Telecommunication Union (ITU), and the location of passenger flights is publicly accessible, as is the location of maritime vessels using AIS transponders.

As an alternative or in combination with the use of databases as described above, the determination of the identity of detected objects may be performed based on inputting the received signals into a machine learning model which has been trained to perform identification determination based on said input. The machine learning model may for instance have been trained on any of the databases as previously described.

Accordingly, by at least any of the above-described manners, the identity of the detected object(s) may be determined based on the received signals.

It is noted that step 130 and step 150 can be performed in any order, or at the same time.

In step 170, a current absolute position of the one or more detected objects is determined. Preferably the determining of the current absolute position of the one or more detected objects comprises retrieving, from a database, position information about the one or more detected objects based on the identity of the one or more detected objects.

In specific embodiments, the asset may use the identity of the detected objects as determined in any previous manner to lookup information in a database. The database may be the same as or different from the database as previously described with reference to the determination of the identity of the detected object(s). The database may be a remote publicly accessible and available database, may be a locally stored database, or may be a combination of the two such as local database including a copy of information in a publicly accessible database wherein the local database is updated when connection to the remote publicly accessible database is available and/or desirable. The database, regardless of type, may include information which associates the identity of specific objects - such as particular satellites or aeroplanes - with position information, such as absolute position information of the associated elevated. For instance, the position information may include travel path information for particular objects, such as for satellites specific information about the orbit of particular satellites or for aeroplanes specific flight path information for particular aeroplanes. For instance, the orbit information of many satellites is published by the International Telecommunication Union (ITU) and is publicly available and accessible, for instance as provided for by the ITU World Radiocommunications Seminar 2022 (WRS-22) *'Regulation of satellites in Earth's orbit'.* Further, there are many examples of publicly available two-line element (TLE) data sets, which include accurate predictions of Satellite velocity, altitude and geographical location. Similarly, flight path information for civilian aeroplanes is publicly available and accessible information.

The database, for instance the locally stored database, may include information from previous or historic determinations of absolute position information for the asset and/or for one or more objects as determined at previous or historical points in time, for instance as performed by the asset or by other assets and shared with the asset. For instance, the asset may have previously known, determined, or been told of the identity and absolute position information of a particular object at particular points in time, and in such instances then the asset may have stored this information and association for future use and retrieval.

Hence the determining of the absolute position of the detected object may comprise looking up the identity of the detected object(s) in the database and determining the absolute position of the object(s) based on the position information associated therewith, such as travel path information.

For instance, in certain circumstances the travel path information in the database may include the absolute position of objects at any or all points in time, and hence determining the current absolute position of the detected object(s) comprises looking up and retrieving the current absolute position of the one or more objects based on the current time. Alternatively, in certain circumstances, the travel path information in the database may include a known absolute position of the object(s) at one or more particular points in time, for instance a previous historical point in time. In such circumstances, determining the current absolute position of the detected object(s) comprises performing a calculation of the current absolute position based on the known travel path information and the current time, for instance based on velocity and time of travel of the objects in the database based, for instance, the orbit information for satellites. As previously mentioned, there are many publicly available TLE data sets which include information which can be used to predict, and calculate the current absolute position, or which simply included the calculated current absolute position.

Further, a confidence value may be associated with the determined absolute position of the object. For instance, where a calculation of the absolute position of the detected object has been performed based on previous historic position information of the object, a confidence value may be associated with this depending on the level of certainty associated with the determination, which for instance may decrease with larger passages of time between current time and the previous historical point in time at which the absolute position information of the object was known. Further, the confidence value associated with the determined absolute position of the object may be related and/or based on any confidence value associated with the determined identity of the detected object as previously described. Further, the confidence value may be associated with the type of detected object, where for instance the determined absolute position information of an aeroplane may be considered to be less accurate than that of a satellite as the position of an aeroplane at any point in time is more likely to have changed relative to its scheduled flight path, due for instance to delays, weather conditions or any other factors. In contrast, the orbit information associated with satellites is far more stable, predictable and unlikely to change over time, and therefore may merit a higher associated confidence value.

In a specific embodiment when the detected object is a maritime vessel having an AIS transponder transmitting AIS information including the position information in the form of coordinates, the determining of the current absolute position of the detected object may not require the use of a database. For instance, when the detection system comprises at least the EM received signals detection system, then the content of the received signals can be analysed to determine the current absolute position information of the detected object because the AIS information actively broadcasts the current location of the maritime vessel. Hence in such specific embodiments the determining the current absolute position information of the one or more detected objects may be based on the received signals.

In step 190, a current absolute position of the asset is determined based on the relative position of the asset with respect to the one or more detected objects and the current absolute position of the one or more detected objects.

In particular, having determined the known absolute position information of at least one detected object, and the relative position information between the asset and the at least one detected object, the absolute position information of the asset can be determined by calculation in any appropriate manner. For instance, given the determined information the absolute position of the asset could be determined using the same or similar methods as are used in traditional celestial navigation. Any appropriate mathematical approach can be used to determine the absolute position of the asset based on the previously determined information, such as three-dimensional geometry, including spherical trigonometry, three-dimensional rotation matrices, the spherical laws of sine, the spherical laws of cosine etc. For instance, in accordance with any method and embodiment as described herein in which the relative position comprises at least the azimuth and elevation of the object, the absolute position of the asset can be determined by calculating the azimuth-elevation line from a single detected object of known absolute position, and calculating wherein this azimuth-elevation line intercepts with the surface of the Earth. Such a determination would be equivalent to determining position using a sextant with the sun or stars. Further, if the relative position comprising azimuth and elevation is known for known for multiple detected known objects of a known absolute position, then the multiple-azimuth elevation lines can be calculated from each of these objects and this can be used to supplement the previously described calculation by additionally using 3D triangulation. Further, in accordance with any method and embodiments as described herein in which the distance to the known detected objection is also known (for instance when the detection system includes a radar system), the accuracy of determination of the absolute position of the asset can be improved by additionally using this information with the calculations as previously described.

In embodiments as previously described in which a confidence value was associated with either the determined identity of the detected object(s) and/or the absolute position information of the detected object(s), a confidence value may also be associated with the determined absolute position of the asset, and for instance may be based on the other confidence values.

In performing the determination of a relative position of the one or more detected objects in accordance with step 130, it is noted that there may be a large number of detected objects. For instance, in the example of LEO satellites, there are typically hundreds of low earth satellites above the horizon anywhere on Earth at any single time. This makes them advantageous for the assert to use, and become familiar, as they are almost always detectable. Further LEO satellites are advantageous to use because they are at for instance a range of altitudes, have stable and predictable orbits, have stable radar cross sections, and are typically easily detectable using active phased array radars. However, as there are such a large number of LEO satellites, the processing burden in performing detection and identification can be large, and it can be difficult to identify, i.e. disambiguate, between them.

Accordingly, in a specific embodiment with reference to determining the identity in step 150, of a plurality of detected objects, a particular detected object may be relatively (or the most) quickly, or readily, or accurately, and/or easily identifiable and may be chosen to be the first identified detected object. For instance, such a particular detected object may be relatively unique and/or dissimilar to other detected objects, and may therefore have particularly distinguishable characteristics with respect to others of the detected objects. Alternatively, a group of such particular detected objects may be chosen.

For instance, there are a number of types of and/or specific objects which may be comparatively easy to identify, with for instance high accuracy and relatively quickly. For instance, particular satellites may have for example unusual orbits, high orbits, elliptical orbits (i.e. there are fewer than 100 elliptical orbit satellites), particular characteristic EM signal emissions, and/or particular radar cross sections etc. For instance, on the considerable majority of the Earth's surface - with the exception of for instance above the 81^{st} parallel north - the asset should be within line of sight of, and therefore likely to be able to detect, a geostationary satellite. Hence certain objects are at least one of likely to be detectable regardless of where the asset is and/or have particularly distinguishable characteristics as compared to other objects. Similarly, as previously mentioned, objects such as the International Space Station and the Hubble Telescope are particular unique and have distinguishable characteristics. Such objects can therefore be detected relatively quickly and with relatively high accuracy.

In particular, in a specific embodiment having performed detection of the detected objects based on the received signals, the received signals for each detected object may then be reviewed to determine which of the received signals - for instance the radar cross-section, and/or the content and/or characteristics EM received signals - has particularly distinguishable characteristics, for instance as being particularly unusual, dissimilar or distinguishable as compared to the received signals from the rest of the detected objects. Based on this determination, the chosen detected object may be selected to have its identity determined first, for instance by consulting any previously described database containing information which associates the received signals with identities of specific objects, and by inputting the received signals of the chosen detected object to thereby determine the associated identity. Alternatively or additionally, this determination may be performed based on historical information stored at the asset database.

In an alternative specific embodiment, the process may begin by first consulting any previously described database - local or remote - containing information which associates received signals with identities of specific objects, and reviewing the database to determine which of the received signals in the database - for instance the radar cross-section, and/or the content and/or characteristics EM received signals - has particularly distinguishable characteristics, for instance as being particularly unusual, dissimilar or distinguishable. The received signals received by the asset may then be reviewed to determine if any of these match the distinguishable characteristics received signals of the chosen object from the database, and if so subsequently determining the identity of associated detected object as being that of the object associated with the distinguishable characteristics received signals from the database.

In any of the above specific embodiments, the database may contain a collection of received signals and associated objects which are labelled with metadata specifying them as having particularly distinguishable characteristics. In particular embodiments, these objects and their received signals may be consulted first.

Once the identity of a first detected object has been determined in accordance with the above, the method may proceed as outlined in any previously described manner to determine the current absolute position of the first detected object in accordance with step 170. Based on the determination of the absolute position of the first detected object in accordance with any previously described manner, this absolute position information may be used to search the database for other objects having absolute positions similar to the absolute position of the first detected object at the current time. As previously described, this may include performing calculations to determine the current absolute position of the objects in the database. The determination of other objects having absolute position similar to the first detected object may therefore provide a list of candidate objects which the asset may also have detected in the one or more detected objects - as they are in the vicinity of the first detected object - and hence this reduced and more focused list of candidate objects may be consulted and the determination of the identity of the plurality of detected objects may therefore be completed with increased speed and accuracy as compared to having to consult the entire database.

Further, by determining the identity of a first detected object in such a manner, a first absolute position of the asset may be determined by subsequently applying any process in accordance with steps 170 and 190. This first absolute position may be considered to be of a particular confidence value, and based on this first absolute position processes in accordance with steps 130 to 190 may subsequently be iteratively or repeatedly applied to refine the determination of the absolute position of the asset. For instance, using the first absolute position of the asset, it may be possible to use this information to infer which other objects should be amongst the detected objects of the asset - for instance as based on any described calculation of estimated absolute position information for objects in the database as described herein - and hence to limit the available candidates of potential objects in the database which are potentially amongst the detected objects. Hence this would increase the speed and accuracy of the determination of the absolute position of the asset as determined in accordance with methods described herein, as the determination of the identity of the detected objects would be performed with increase speed and accuracy.

In other words, in situations in which there are a large number of detected objects as determined in accordance with step 110, this can be advantageously resolved by first using a smaller number of detected objects having particularly distinguishable characteristics - such as satellites in LEO or in higher, distinctive orbits (such as elliptical orbits) - to determine the absolute position information for the detected object and subsequently a current absolute position of the asset in accordance withs steps 130 to 190. These current absolute position information values may be considered to be an approximate or first estimate current absolute location for each of the first detected object and the asset, but this approximate or first estimate information can be used to disambiguate which other objects may have been detected by virtue of being in the vicinity at the current time, and hence filter or identity other candidate objects, e.g. from the database associated identity information with received signal information. Accordingly, in accordance with specific embodiments, it may be possible to advantageously reduce the calculation burden, perform determination of identity more quickly and accurately, and perform subsequent absolute position information of the asset in a more accurate manner.

By way of a specific example of determining a first detected object, LEO satellites such as the International Space Station and Hubble Telescope may be considered to have distinguishable characteristics, for instance in terms of radar cross section and/or received EM signals. Accordingly, as previously described, in one example the received signals of LEO satellites such as the International Space Station will first be looked for in the database associating identity with received signals, and these will be compared with the received signals of detected objects determined by the asset to see if any match.

Hence in certain specific embodiments it is advantageously quick, efficient and accurate to determine the identity of a first one of the objects having distinguishable characteristics with respect to the others of the objects, and subsequently determining the identity of others of the one or more objects based on the identity of the first one of the objects.

In a specific embodiment with reference to determining the identity in step 150, it may be the case that the asset has access to, or has stored information about, its absolute position at a previous historical point in time. For instance, the asset may at some previous point in time have performed any of the methods outlined in the present application, and may have stored its absolute position information as determined in accordance with step 190. Additionally or alternatively, the asset at some previous point in time may have been able to determine its absolute position in any other manner, such as using GNSS systems or simply knowing where it was as it was at a point of origin such as a maritime vessel leaving a home port or a aerial vehicle leaving a home airbase etc. Regardless of the manner in which the absolute position was known at the previous point in time, the asset may have stored this information and may use it to assist in determining the identity of detected objects.

Accordingly, in such specific embodiments, it is possible to determine an estimated current absolute position of the asset based on the known absolute position of the asset at the previous point in time and the approximate travel path of the asset from the known absolute position of the asset. For instance, the travel path information for the asset since the known absolute position may be able to be determined, known or approximated using other systems on board, such as for instance the previously described at least one of an inertial navigation system, dead reckoning, systems for tracking the velocity and/or speed and direction of movement of the asset. Using these systems, an estimated current absolute position can be determined in any appropriate manner. For example, if it is known where the asset was at a particular point in time, the direction it has travelled since, the speed it has been travelling since, and how long it has been travelling, it will be able to determine an estimated current absolute position.

Given the estimated current absolute position of the asset, and that the asset has determined - based on the received signals from the detected objects - a relative position of the one or more detected objects in accordance with step 130, it is possible to determine estimated absolute current positions for the detected objects. For instance, this determination may be performed using the same mathematical principles and approaches as described with reference to step 190 above. Accordingly, for each of the detected objects, a first estimated current absolute position can be determined. Accordingly, for one or more detected objects, a first estimated current absolute position can be determined based on the determined relative position of the detected objects and the estimated current absolute position of the asset.

Given any previously described database which includes information associating the identities of objects with position information, it is possible to use this first estimated current absolute position information associated with detected objects as part of a search in such a database to attempt to determine the identity of the detected objects (determined in accordance withs step 110) by determining if the first estimated current absolute position information matches (or matches within a sufficient confidence threshold) the determined current absolute position information of any of the objects listed in the database, and if so, determining that the identity of such a matching object (or the object with the closest match) is the identity of the relevant detected object.

In particular, the first estimated current absolute position may be compared to a second current estimated absolute position as determined for objects from the database, wherein the first and second estimated current absolute positions may be compared to each other to attempt to determine a match and thereby determine the identity of detected objects. In other words, in specific embodiments in which an estimated current absolute position of the asset can be determined based on a known previous absolute position of the asset, given the relative position information for each of the detected objects detected by the asset, it is possible to determine and compare two different estimated current absolute positions for the detected objects: this first estimated current absolute position of detected objects is derived from information determined by the asset (based on the estimated current absolute position of the asset and the relative position of the detected object), and it can be compared against second current estimated absolute position information determined based on information in the database. Accordingly these two different estimates of the same information can be compared and potential identity matches can therefore be determined in this manner.

The second estimated current absolute position of objects can be determined based on the information in the database, such as the travel path information. As previously described, such a determination can be based on performing a calculation based on the known travel path information and the current time. Accordingly, it is possible to arrive at second estimated current absolute position information for objects in the database.

The first estimated current absolute position information may be used to limit the number of objects in the database for which the second estimated current absolute position is determined and compared. For instance, the determination of the second estimated current absolute position may be limited to only objects in the database for whom it is determined might be or are likely to be detected by virtue of being in the vicinity (within a predetermined threshold) of the first estimated current absolute position. Hence this reduces the burden of calculation, and thereby increases the speed, of the second estimated current absolute position to being only for a reduced list of potential candidate objects in the database. Additionally or alternatively, the second estimated current absolute position may only be determined for objects which the assert previously detected and identified as detected objects based on determinations made at the previous point in time when the asset knew its absolute position. In other words, at the point in time when the asset knew its absolute position (e.g. using either GNSS or because it was at its origin such as a port), if it also performed detection and identification of an object(s) at this time, the second estimated current absolute position at the current time may first be determined for this object(s) with a known identity and a known position at that previous time, as it may be considered that this object should still be detectable by the asset at the current point in time. In a similar manner as previously described, this also reduces the calculation burden.

For each of the detected objects, a comparison can then be made between the first estimated current absolute positions to see if they match or most closely match (i.e. within a confidence threshold) any of the second estimated current absolute positions as determined for the objects in the database. If there is a match, or if there is a match above a certain confidence threshold, between the first estimated current absolute position of a detected object and a second estimated current absolute position of an object in the database, then the identity of the detected object can be determined to be the identity of the associated object in the database.

In other words, in certain embodiments it may be possible to perform determination of the identity of detected objects in accordance with step 150 - and subsequent determination of the absolute position of the asset in accordance with steps 170 to 190 - based on the fact that the asset knew it's current absolute position at some recent or previous point in time, and hence can use this information to estimate where its current absolute position may be. This estimation of where the current absolute position of the asset may be can be used to narrow down the search for, and list of, the identities of potential candidate objects which the asset might have detected as detected objects. In other words, it may then be possible to periodically predict or infer the identity and new current absolute positions of, for instance, LEO satellites, including LEO satellites that have come into the range of detection since the previous known absolute position information. For instance, in the instance that the asset is a maritime vessel. If the asset knew that four hours ago it was in the northern hemisphere, and for instance was in particular in the North Atlantic Ocean, then it can be reasonably assumed that it is still in the North Atlantic Ocean, especially if it knows it travelled approximately north etc. Hence this information can be used to reduce the list of potential candidate objects which may be the identity of objects in the detected objects, as for instance there is no need to determine or check the identities of objects which are only visible in the Southern Hemisphere.

Hence, in other words, in accordance with specific embodiments the identity of a detected object can be determined by: determining an estimated current absolute position of the asset; using the determined the relative position (such as direction and distance) between the asset and the detected object to determine a first estimated current absolute position of the detected object; mapping the detected object and its first estimated current absolute position to the entries in the database associating object identities with position information; and choosing the identity of the object in the data with the highest matching confidence value.

Alternatively or additionally, the identity of detected objects may be determined by: performing an initial mapping of a detected object to the identity of an object entry in the database (for instance based on the estimated current absolute position of the asset, the first estimated current absolute position of the detected object, the time of detection of the detected object, and/or the radar-cross section); associating a confidence value to the initial mapping; performing a subsequent mapping of a detected object to an entry in the database at a subsequent point in time; associating a confidence value to the subsequent identity mapping; increasing the confidence value if the mapping results are the same.

This determination of the identity of a detected object can be associated with a particular confidence value. The confidence value may increase over time based on repeated measurements, or for instance based on additionally performing the determination of the identity using any of the other methods as previously described, such as for instance the use of radar cross-section and/or the content or characteristics of EM received signals. Hence the determination of the identity of the detected objects in accordance with step 150 may be based on the estimated current absolute position of the asset and/or may be combined with any other described method of determining the identity of the detected objects in accordance withs step 150, such as for instance based on the use of radar cross-section and/or the content or characteristics of EM received signals. By iteratively repeating the processes described, or by using a combination of processes as described, a more accurate determination of the identity of detected objects can be arrived at and any associated confidence values can be increased.

In any of steps 150, 170 and 190, the information determined at these stages may be stored by the asset in a database, such as any of the databases as previously described, such that it may be retrieved and used to assist in future determinations. For instance, the identity of one or more detected objects and the received signals upon which the identity was determined may be associated and stored, the absolute position information of a particular object at a particular point in time and the identity upon which the absolute position was determined may be associated and stored, and/or the absolute position of the asset at a particular point in time may be stored. Each of these pieces of stored information may be associated with a confidence value, which may be varied over time based on repeated or multiple determinations and detections, and each of these pieces of stored information may be added to or incrementally updated throughout the operational use of the asset.

Any asset as previously described may be part of a network or collection of assets, wherein any determination of any of the following may be shared amongst the assets and the information may be stored within each asset and updated accordingly, such that the assets may benefit from information determined from other assets: detection of one or more detected objects, determinations of a relative position of the one or more detected objects with respect to the asset, determinations of the identity of the one or more detected objects, determining a current absolute position of the one or more detected objects, and/or determining a current absolute position of the asset.

The determined current absolute position of detected objects may be considered to be more accurate than the information concerning the position of the objects in either the database of the asset or the remote publicly accessible database. Accordingly, the position information in the databases may be updated, corrected, or supplemented based on the determined current absolute position of detected objects as determined by the asset. For instance, this may correct "drifts" not documented in publicly available information.

Advantageously, in embodiments of the present application in any manner as described above, the absolute position of the asset may be determined accurately based only on the detection of a single object, and on determining the absolute position of that single detected object and the relative position of that single detected object with respect to the asset. However, the more detected objects and the more determined absolute position information and relative position information it is possible to determine for these detected objects, the more accurately the absolute position information of the asset can be determined. For instance, given the known absolute position information and relative position information of a plurality of different detected objects, the absolute position of the asset can be determined multiples times based on the information associated with each of the detected objects and an improved accuracy absolute position information of the asset can be determined by combining and comparing the plurality of determinations of the absolute position information of the asset. For instance, the use of at least three different detected objects may provide a determination of the absolute position information of the asset with high accuracy. Further, embodiments of the present application envisage detecting and using a plurality of different types of detected object in combination, for instance wherein the plurality of detected objects comprises both satellites, such as LEO or MEO satellites as well as aeroplanes.

Further, in embodiments in which there are confidence values associated with the absolute position information of the asset, where there are multiple determinations of the absolute position information of the asset, their relative importance and use may be weighted based on the confidence value associated with each.

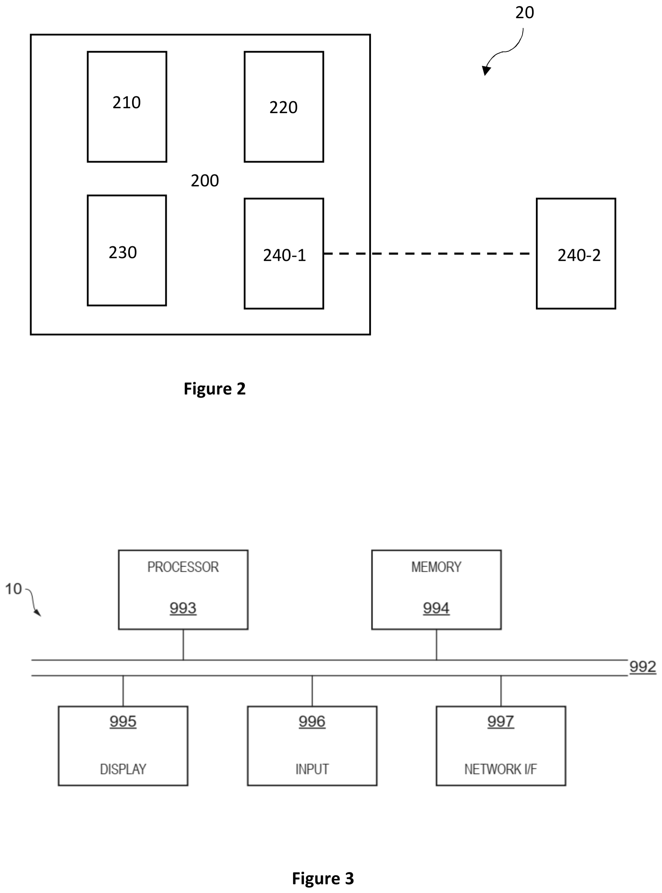

**Figure 2** shows an example system 20 in accordance with aspects and embodiments of the present application. Asset 200 is in accordance with any asset as described in the present application.

The asset 200 includes a detection system 210 in accordance with any detection system described herein. For instance, the detection system may be a radar system, such as an active phased radar array, and/or may include an

The asset 200 includes an information processing system 220 in accordance with any described herein. The information processing system 220 may be configured to perform any of the methods and/or processes described in the present application. The information processing system 220 may be within or connected to the detection system 210.

The asset 200 includes other hardware 230. The hardware 230 may be in accordance with any hardware as described herein. For instance, the hardware 230 may comprise additional and other forms of navigation, location determination and/or tracking system. For instance, the asset may additionally include at least one of an orientation or compass system, an inertial navigation system, systems for tracking the velocity and/or speed and direction of movement of the asset. The asset is capable of time determination in general and in association with any measurements it makes.

The system 20 may includes a database 240-1, 240-2 or databases 240-1, 240-2 in accordance with any database as described herein. The asset 200 may include a local database 240-1. The system 20 may include a remote database 240-2, which may for instance be a third party database or a database associated with the asset 200. The system 20 may include both the local database 240-1 and the remote database 240-2, and the local database 240-1 and the remote database 240-2 may be in communication with each other. The communication may be continuous, semi-continuous, or intermittent, and may be able to be selectively activated and deactivated. The local database 240-1 may update its content in part based on communication with the remote database 240-2. The local database 240-1 may store information concerning any previous determination or processing made by the asset 200, such as for instance information relating to at least one of: current or historical detection of one or more detected objects based on received signals received by the asset, the identity of the one or more detected objects, the current absolute position of the one or more detected objects, current or historical position information about the one or more detected objects, and/or the current or historical absolute position of the asset.

### Example Computer System Implementation

**Figure 3** is a block diagram of an information processing apparatus 10 or a computing device 10, such as a data storage server, which embodies the present invention, and which may be used to implement some or all of the operations of a method embodying the present invention, and perform some or all of the tasks of apparatus of an embodiment. The computing device 10 may be used to implement any of the method steps described above and/or any processes described above. The information processing apparatus 10 may be the information processing apparatus 220 shown in **Figure 2****.**

The computing device 10 comprises a processor 993 and memory 994. Optionally, the computing device also includes a network interface 997 for communication with other such computing devices. Optionally, the computing device also includes one or more input mechanisms such as keyboard and mouse 996, and a display unit such as one or more monitors 995. These elements may facilitate user interaction. The components are connectable to one another via a bus 992.

The memory 994 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, and/or any processes described above. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the method steps described herein. The memory 994 stores data being read and written by the processor 993 and may store training data and/or network weights and/or patches and/or updated patches and/or embeddings and/or vectors and/or graphs and/or representations and/or difference amounts and/or equations and/or other data, described above, and/or programs for executing any of the method steps and/or processes described above. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 993 may be considered to comprise any of the modules described above. Any operations described as being implemented by a module may be implemented as a method by a computer and e.g. by the processor 993.

Optionally, the apparatus 10 includes a display unit 995 which may display a representation of data stored by the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc. may be included in the computing device.

Methods embodying the present invention may be carried out on a computing device/apparatus 10 such as that illustrated in **Figure 3****.** Such a computing device need not have every component illustrated in **Figure 3****,** and may be composed of a subset of those components. For example, the apparatus 10 may comprise the processor 993 and the memory 994 connected to the processor 993. Or the apparatus 10 may comprise the processor 993, the memory 994 connected to the processor 993, and the display 995. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

For the purposes of the present disclosure, the term "machine learning model" encompasses within its scope the following concepts:
- machine Learning algorithms, comprising processes or instructions through which data may be used in a training process to generate a model artefact for performing a given task, or for representing a real world process or system;
- the model artefact that is created by such a training process, and which comprises the computational architecture that performs the task; and
- the process performed by the model artefact in order to complete the task.

References to "machine learning model", "model", model parameters", "model information", etc., may thus be understood as relating to any one or more of the above concepts encompassed within the scope of "Machine learning model".

The above-described embodiments of the present invention may advantageously be used independently of any other of the embodiments or in any feasible combination with one or more others of the embodiments.

### Alternative Embodiments

The embodiments described above are illustrative of, rather than limiting to, the present invention. Alternative embodiments apparent on reading the above description may nevertheless fall within the scope of the invention.

Alternative statements of the invention are recited below as numbered clauses:
**1.** A computer-implemented method of determining the location of an asset, the method comprising:
   performing, from the asset, detection of one or more detected objects based on received signals received by the asset;
   determining, based on the received signals, a relative position of the one or more detected objects with respect to the asset;
   determining, based on the received signals, an identity of the one or more detected objects;
   determining a current absolute position of the one or more detected objects; and
   determining a current absolute position of the asset based on the relative position of the asset with respect to the one or more detected objects and the current absolute position of the one or more detected objects.
**2.** The computer-implemented method of clause 1, wherein the determining the current absolute position of the one or more detected objects comprises: retrieving, from a database, position information about the one or more detected objects based on the identity of the one or more detected objects.
**3.** The computer-implemented method of any preceding clause, wherein the received signals comprise reflected radar signals received in response to the asset emitting radar signals from a radar array.
**4.** The computer-implemented method of any preceding clause, wherein the received signals comprise electromagnetic signals emitted or reflected by the one or more detected objects.
**5.** The computer-implemented method of any preceding clause, wherein the relative position of the asset comprises the azimuth and elevation of the one or more detected objects determined by analysing the received signals.
**6.** The computer-implemented method of clause 5 when dependent on clause 3, wherein the relative position further comprises the distance from the asset to the one or more detected objects as determined by analysing the received signals.
**7.** The computer-implemented method of clause 2, or any one of clauses 3 to 6 when dependent on clause 2, wherein the database comprises information associating the identity of one or more objects with position information, the position information comprising travel path information for the one or more objects.
**8.** The computer-implemented method of clause 7, wherein the determining the identity comprises:
   determining an estimated current absolute position of the asset based on a known absolute position of the asset at a previous point in time and the approximate travel path of the asset from the known absolute position of the asset;
   determining, for one or more detected objects, a first estimated current absolute position based on the determined relative position and the estimated current absolute position of the asset;
   determining, for one or more objects from the database of a known identity, a second estimated current absolute position; and
   comparing the first and second estimated current absolute positions, and determining that the identity of one of the one or more detected objects is the known identity of an object from the database with the second estimated current absolute position.
**9.** The computer-implemented method of clause 8, wherein the one or more objects from the database is of a known absolute position at the previous point in time, and the determining the second estimated current absolute position is based on the travel path information for the one or more objects; and
   wherein if the comparison is above a confidence threshold, then performing the determining that the identity of the one or more detected objects is the known identity of an object from the database with the second estimated current absolute position.
**10.** The computer-implemented method of any one of clauses 7 to 9, wherein the determining the identity of the one or more detected objects comprises determining the identity of a first one of the detected objects having distinguishable characteristics with respect to the others of the detected objects, and subsequently determining the identity of others of the one or more detected objects based on the identity of the first one of the detected objects.
**11.** The computer-implemented method of any one of clauses 7 to 10 when dependent on clause 3, wherein the determining the identity comprises determining the radar cross section of the one or more objects.
**12.** The computer-implemented method of any one of clauses 7 to 11 when dependent on clause 4, wherein the determining the identity comprises determining the identity of the one or more objects based on content and/or characteristics of the electromagnetic signals emitted by the one or more objects.
**13.** The computer-implemented method of clause 2, or any one of clauses 3 to 12 when dependent on clause 2, wherein the database includes at least one of:
   publicly accessible information; and/or
   previously determined absolute position information of the asset, and/or previously determined absolute position information one or more objects, at one or more historical points in time.
**14.** The computer-implemented method of any preceding clause, wherein the one or more objects are elevated objects, and wherein the one or more elevated objects are astronomical objects such as satellites, and/or aerial objects such as aeroplanes, and wherein when the elevated objects are satellites, the satellites are preferably low earth orbit satellites.
**15.** A computer-readable storage medium comprising instructions which, when executed by a computer, cause the computer to carry out the method of any preceding clause.

## Claims

1. A computer-implemented method of determining the location of an asset, the method comprising:
performing, from the asset, detection of one or more detected objects based on received signals received by the asset;
determining, based on the received signals, a relative position of the one or more detected objects with respect to the asset;
determining, based on the received signals, an identity of the one or more detected objects, comprising determining the identity of a first one of the detected objects having distinguishable characteristics with respect to others of the detected objects, and subsequently determining the identity of others of the one or more detected objects based on the identity of the first one of the detected objects;
determining a current absolute position of the one or more detected objects, comprising retrieving, from a database, position information about the one or more detected objects based on the identity of the one or more detected objects; and
determining a current absolute position of the asset based on the relative position of the asset with respect to the one or more detected objects and the current absolute position of the one or more detected objects.

2. The computer-implemented method of any preceding claim, wherein the received signals comprise reflected radar signals received in response to the asset emitting radar signals from a radar array; and/or
wherein the received signals comprise electromagnetic signals emitted or reflected by the one or more detected objects.

3. The computer-implemented method of claim 2, wherein the relative position of the asset comprises the azimuth and elevation of the one or more detected objects determined by analysing the received signals; and/or
wherein the relative position further comprises the distance from the asset to the one or more detected objects as determined by analysing the received signals.

4. The computer-implemented method of any preceding claim, wherein the database comprises information associating the identity of one or more objects with position information, the position information comprising travel path information for the one or more objects.

5. The computer-implemented method of any preceding claim, wherein the determining the identity of others of the one or more detected objects is further based on determining the absolute position information of the first one of the detected objects, and searching for other objects in the database having position information similar to the absolute position information of the first one or more detected objects.

6. The computer-implemented method of any of any preceding claim, wherein the distinguishable characteristics may preferably comprise at least one of: an unusual orbit, a high orbit, an elliptical orbit, characteristic electromagnetic emissions, and/or characteristic radar cross section; and optionally:
wherein the first one of the elevated objects is a geostationary satellite.

7. The computer-implemented method of any preceding claim when dependent on claim 2, wherein the determining the identity comprises determining the radar cross section of the one or more objects.

8. The computer-implemented method of claim 7, wherein the performing identification comprises retrieving the identity of the one or more objects from a database comprising information associating particular radar cross sections with the identities of particular objects.

9. The computer-implemented method of claim 8, wherein the database comprises radar cross section information comprising information associated with reflection characteristics and/or different signal characteristics; and/or
wherein the performing identification comprises inputting the radar cross section into a machine learning model configured to perform identification of objects based on the radar cross section.

10. The computer-implemented method of any preceding claim when dependent on claim 2, wherein the determining the identity comprises determining the identity of the one or more objects based on content and/or characteristics of the electromagnetic signals emitted by the one or more objects.

11. The computer-implemented method of claim 10, wherein the performing identification comprises retrieving the identity of the one or more objects from a database comprising information associating particular content and/or characteristics of the electromagnetic signals emitted by the one or more objects with the identities of particular objects.

12. The computer-implemented method of any one of claims 10 to 11, wherein the electromagnetic signals emitted by the one or more objects comprises communications data and/or image data; and optionally:
wherein the characteristics comprise at least one of frequency, data bandwidth, pulse, and/or length encoding type.

13. The computer-implemented method of any preceding claim, wherein the database includes at least one of:
publicly accessible information; and/or
previously determined absolute position information of the asset, and/or previously determined absolute position information one or more objects, at one or more historical points in time.

14. The computer-implemented method of any preceding claim, wherein the one or more objects are elevated objects, and wherein the one or more elevated objects are astronomical objects such as satellites, and/or aerial objects such as aeroplanes, and wherein when the elevated objects are satellites, the satellites are preferably low earth orbit satellites.

15. A computer-readable storage medium comprising instructions which, when executed by a computer, cause the computer to carry out the method of any preceding claim.
